# FASCICULE DE BREVET EUROPEEN

(11) **EP 1 046 457 B1**
(45) Date de publication et mention de la délivrance du brevet: **24.09.2003**
(21) Numéro de dépôt: 99107967.4
(22) Date de dépôt: 22.04.1999
(51) Int. Cl.: B23Q 7/02, B23P 19/00, G04D 1/00

(54) **Dispositif pour amener des objets à assembler à un poste de travail**
Einrichtung zum Zuführen von zusammensetzbaren Objekten zu einer Arbeitsstation
Device for transfer to a work station of items to be assembled

(43) Date de publication de la demande: 25.10.2000
(73) Titulaire: SVM Schneider & Vergara, 2608 Courtelary (CH)
(72) Inventeur: Schneider, Pierre, 2610 Saint-Imier (CH); Vergara, Gérard, 2608 Courtelary (CH)
(74) Mandataire: Ravenel, Thierry Gérard Louis

(56) Documents cités:
- EP-A- 0 048 677
- WO-A-85/01236
- CH-A- 596 062
- GB-A- 1 478 946
- GB-A- 2 108 457
- US-A- 3 290 767

## Description

La présente invention est relative à un dispositif pour amener l'un après l'autre une pluralité d'objets de petites dimensions à un poste de travail desservi par un opérateur chargé notamment d'assembler manuellement au moins un composant sur lesdits objets.

Il peut s'agir ici d'un poste de travail isolé ou d'un poste de travail associé à plusieurs autres insérés dans une chaîne d'assemblage. La description de tels postes de travail est connue de plusieurs documents.

Le document CH 596 062 montre par exemple une série d'éléments porteurs rectangulaires qui supportent chacun une pièce à assembler, ces éléments porteurs pouvant se déplacer selon des axes perpendiculaires entre eux et cela parallèlement et perpendiculairement à la direction longitudinale d'une chaîne d'assemblage, il s'agit là d'un système lourd, encombrant et difficilement transportable. On fera remarquer aussi que les pièces à assembler sont solidaires d'une chaîne qui, une fois chargée, est très difficilement modifiable. Si une modification doit être tout de même apportée, il faudra déplacer l'entier du dispositif ou déplacer une à une toutes les pièces posées sur les éléments porteurs. Enfin, il n'est nullement prévu dans ce document d'extraire la pièce à travailler de la chaîne qui la transporte, de telle sorte que les pièces voisines peuvent gêner l'opérateur.

Le document FR 1 248 779 décrit une machine outil qui comprend une table susceptible d'être amenée pas à pas, puis bloquée angulairement dans différentes positions de travail. Des porte-pièces sont disposés sur le pourtour de la table et sont amenés successivement vis-à-vis des broches porte-outils. S'il est évident qu'un tel système peut être transposé à un système permettant l'assemblage manuel de pièces défilant l'une après l'autre devant un opérateur, cet opérateur va être gêné par les pièces situées de part et d'autre de la pièce à travailler de telle sorte que ces pièces limitrophes serviront de support aux poignets de l'opérateur, ce qui est à éviter à tout prix. A remarquer également que la table rotative du document cité n'est pas amovible et que pour passer à d'autres pièces à assembler, il faudra enlever de la table toutes les pièces avant de les remplacer par d'autres.

Le document GB-1 478 946-A, par exemple, décrit un dispositif selon le préambule de la revendication 1.

Pour pallier les inconvénients cités ci-dessus, le dispositif de l'invention prévoit d'installer les objets à travailler sur un posage amovible, facile à remplacer, l'objet en travail étant sorti de ce posage pendant les opérations d'assemblage. Dans ce but, le dispositif de l'invention est remarquable en ce sens qu'il comprend les caractéristiques définies dans la revendication 1.

L'invention va être expliquée maintenant à l'aide de la description qui suit et des figures qui l'illustrent à titre d'exemple et parmi lesquelles
- la figure 1 est une vue de dessus du dispositif selon l'invention où toutes les pièces nécessitant une intervention sont installées sur un carrousel circulaire,
- la figure 2 est une vue semblable à celle de la figure 1, une des pièces à travailler étant installée à un poste de travail,
- la figure 3 montre le seul carrousel visible aux figures 1 et 2, mais enlevé du dispositif,
- la figure 4 est une coupe dans le dispositif montré aux figures 1 et 2,
- la figure 5 est une vue de dessus du mécanisme composant l'invention, et
- la figure 6 est un agrandissement de la zone VI montrée en figure 3.

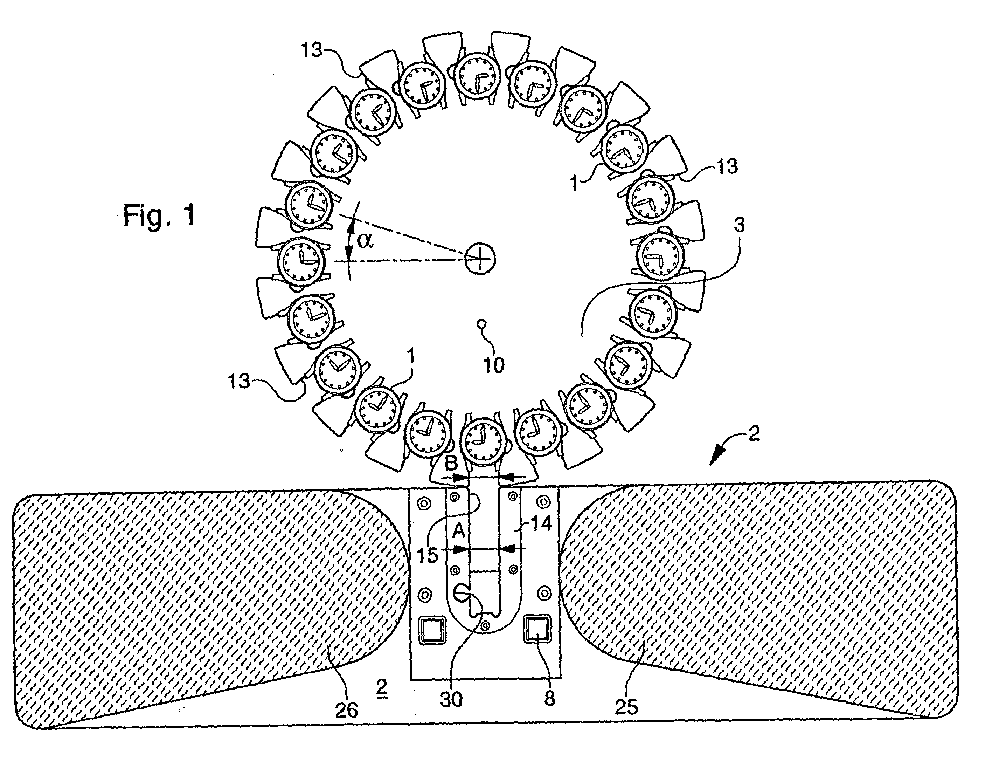

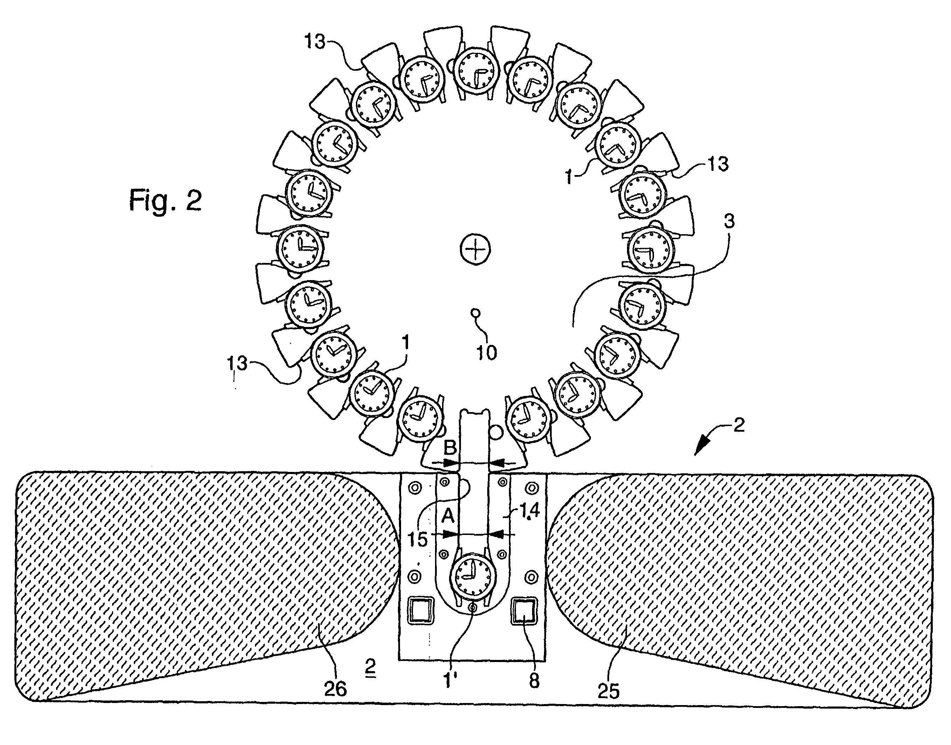

Les figures 1 et 2 montrent le dispositif de l'invention dans son idée la plus générale. On y voit une pluralité d'objets 1 de petites dimensions - ici en exemple, des montres - susceptibles d'être amenés l'un après l'autre à un poste de travail 2. De manière bien connue, ce poste de travail comprend deux accoudoirs 25 et 26 sur lesquels peuvent reposer les avant-bras d'un opérateur. Entre ces accoudoirs se trouve le poste de travail proprement dit où l'objet 1' peut subir une intervention (figure 2), par exemple un réglage ou encore la posé d'au moins un composant, par exemple la glace ou les aiguilles.

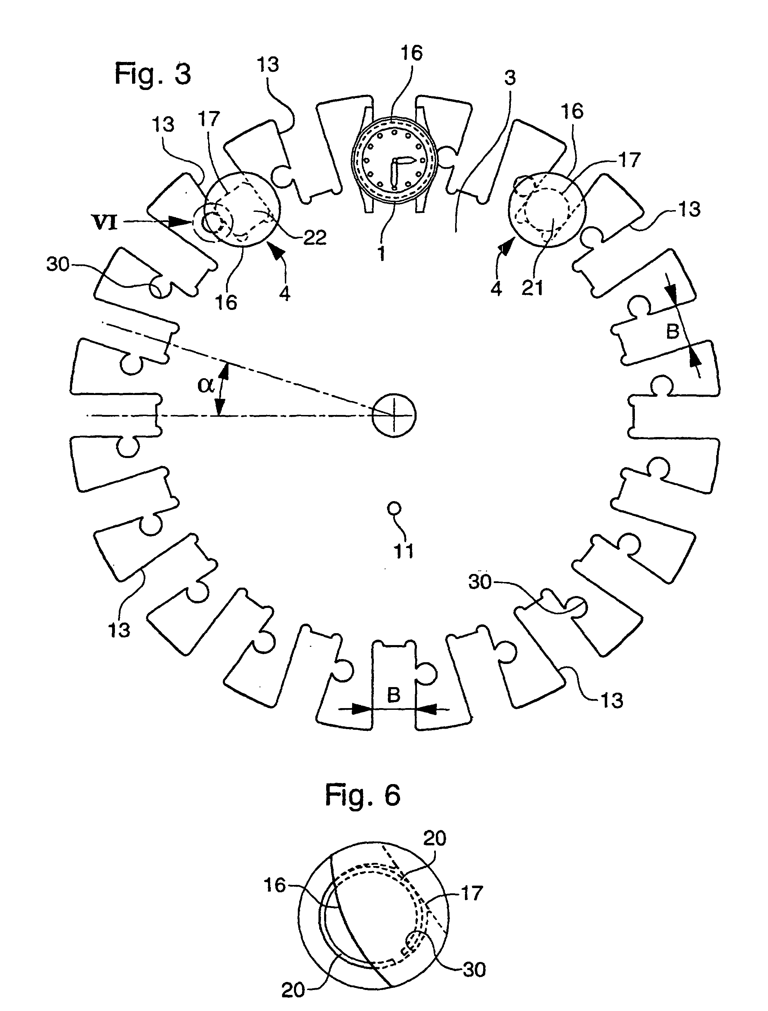

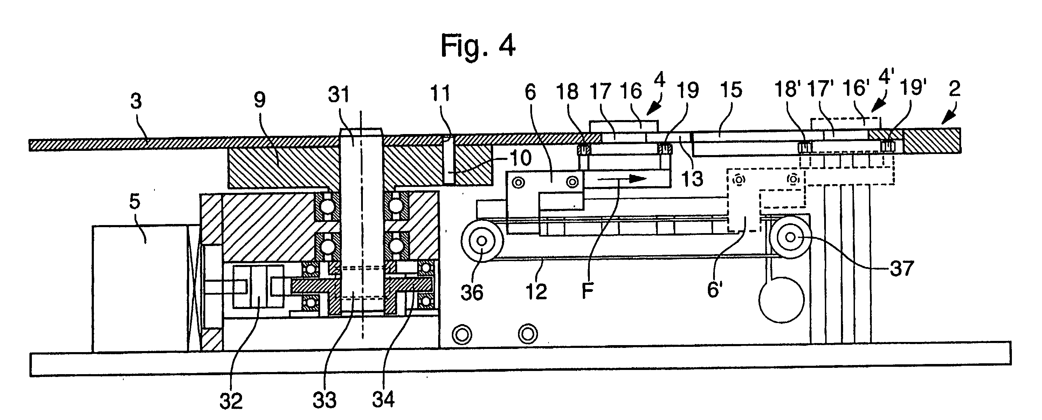

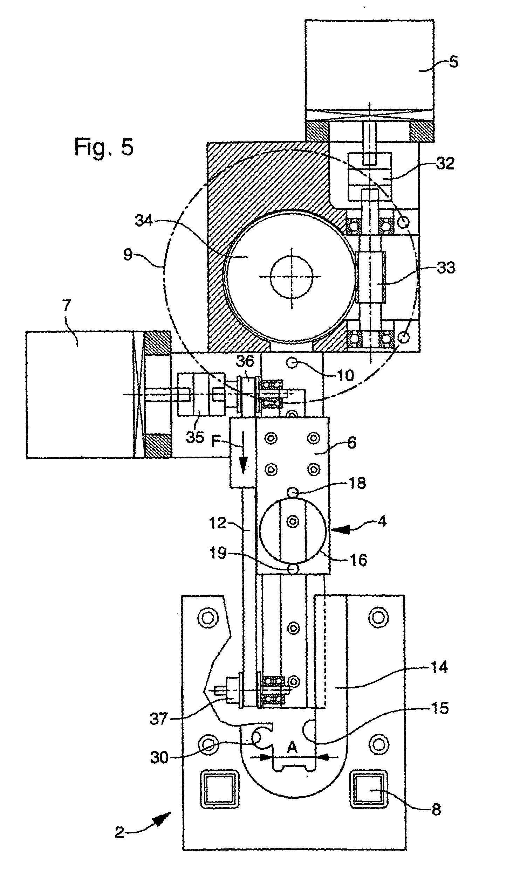

Ce dispositif comporte d'abord un carrousel circulaire 3 mû par un premier organe moteur 5 qu'on aperçoit sur les figures 4 et 5. Le carrousel 5 porte dans sa zone périphérique une pluralité d'éléments porteurs 4 qu'on voit sur les figures 3, 4 et 5. Ces éléments porteurs 4 portent chacun un objet 1 auquel doit être assemblé, par exemple, un composant.

Le dispositif comporte ensuite un chariot 6 mû par un second organe moteur 7 comme cela est visible sur les figures 4 et 5. Ce chariot est arrangé pour venir saisir un des éléments porteurs 4 quand cet élément porteur occupe une position angulaire déterminée propre à amener ledit élément porteur au poste de travail 2.

Enfin le dispositif comporte un système de commande symbolisé sur les figures 1, 2 et 5 par un poussoir 8. Le poussoir 8 peut être actionné par l'opérateur une fois l'opération d'assemblage terminée. Cet actionnement ramène via le chariot 6, l'élément porteur 4 sur le carrousel 3, ensuite de quoi le carrousel tourne jusqu'à ce que l'élément porteur suivant occupe la position angulaire déterminée propre à l'amener sur le poste de travail 2 via le même chariot 6.

La description qui vient d'être donnée définit l'invention selon son acception la plus générale. On va examiner maintenant dans le détail un mode de réalisation particulier qui satisfait à ce principe général.

Comme on le voit sur les figures 1 à 3 et particulièrement bien sur la figure 3, le carrousel 3 comporte dans sa zone périphérique une pluralité de premières échancrures rectangulaires 13 disposées radialement. Les figures montrent vingt échancrures 13. Il pourrait y en avoir moins, par exemple seulement deux, ou plus, par exemple vingt-cinq. Le poste de travail 2 (figures 1, 2 et 5) présente une plaque 14 dans laquelle est pratiquée une seconde échancrure rectangulaire 15 dont la largeur A est sensiblement égale à la largeur B des premières échancrures 13. Comme cela est bien visible sur les figures 3 et 4, l'élément porteur 4 est constitué d'un galet 16 qui présente un évidement 17 au milieu de sa tranche ce qui lui donne l'aspect d'une rondelle de yo-yo. L'évidement 17 est engagé soit dans une des premières échancrures 13 (figures 3 et 4) soit dans la seconde échancrure 17 selon que, respectivement l'élément porteur 4 se trouve sur le carrousel 3 ou sur le poste de travail 2. Comme le montre la figure 4, le chariot 6 a pour mission d'amener l'élément porteur 4, en l'occurrence le galet 16, de la position qu'il occupe en traits pleins sur le carrousel 3 à la position qu'il occupe en traits pointillés sur le poste de travail 2. A cet effet, le chariot 6 est pourvu de deux tenons 18 et 19 entre lesquels s'engage le galet 16 quand la première échancrure 13 se trouve en face de la seconde échancrure 15. Comme le montre la figure 4, ces tenons 18 et 19 sont avantageusement recouverts d'une couche de matériau absorbant les vibrations, par exemple formée d'une section de tuyau en silicone, enfilée sur ces tenons, afin d'éliminer les vibrations lors du transport des éléments porteurs 4. Une fois le galet 16 (voir figure 5) saisi de part et d'autre par les tenons 18 et 19, le chariot 6 avance dans le sens de la flèche F pour loger ce même galet au fond de la seconde échancrure 15 comme cela est montré en traits pointillés sur la figure 4. A ce moment là le chariot 6 occupe la position 6', le galet 16 et son évidement 17 les positions 16' et 17', et les tenons 18 et 19 les positions 18' et 19'. L'élément porteur 4' est alors en position au poste de travail 2 où peuvent être exécutés la ou les interventions qu'il y a lieu d'entreprendre sur l'objet 1 (non représenté ici). Au risque de se répéter, on rappellera encore que, pour que le transport du galet ait lieu, la position angulaire déterminée du carrousel 3 doit être celle pour laquelle une des premières échancrures 13 dudit carrousel 3 se trouve en prolongement de la seconde échancrure 15 du poste de travail 2.

On a représenté à la figure 3 le carrousel 3 en dehors du contexte de la machine. On y voit une montre 1 sur laquelle doit être pratiquée une certaine opération. Cette montre repose sur un élément porteur dont le galet 16 a été dessiné en pointillés. A la droite de ladite montre, a été représenté un élément porteur 4 avec son galet 16. Dans une première exécution possible du galet, l'évidement 17 se présente sous la forme d'un cercle 21. Cette disposition permet de faire tourner l'élément porteur 4 sur lui-même ainsi que l'objet 1 qui pourrait le surmonter. Ainsi quand l'objet est amené au poste de travail, l'opérateur a-t-il le loisir de l'amener dans différentes positions angulaires nécessitées par les interventions à accomplir.

Sur la même figure 3 et à gauche de la montre 1 a été représenté un élément porteur 4 avec son galet 16. Dans une seconde exécution possible du galet, l'évidement 17 se présente sous la forme d'un carré 22 rendant impossible la rotation du galet, le côté du carré étant sensiblement égal à la largeur B de la première échancrure 13. Quand ce galet parviendra au poste de travail 2, on comprend qu'il sera empêché de toute rotation puisque la seconde échancrure 15 possède un largeur B sensiblement égale à la largeur A de la première échancrure 13. Cette disposition est destinée à des opérations - par exemple la mise en place des aiguilles de la montre - où il est impératif que l'objet ne se laisse pas entraîner en rotation.

Les figures 3 et 6 montrent que la première échancrure 13 est munie d'un ressort 20 pour maintenir en place l'élément porteur 4. A cet effet, on pratique un alvéole 30 dans l'échancrure 13, alvéole dans lequel prend place un ressort fendu de forme tubulaire 20. Quand le galet 16 se trouve au fond de l'échancrure 13, le ressort 20 fléchit et maintient en place ledit galet. Les figures 1 et 5 montrent que la seconde échancrure 15 située dans la plaque 14 du poste de travail porte également un alvéole 30 dans lequel prend place un ressort 20 (non représenté) pour maintenir en place l'élément porteur 4 quand il se trouve au fond de ce second alvéole. Ce maintien en place est important surtout pour éviter que les objets ne tombent du carrousel 3 quand on transporte ce dernier. Il est important aussi que l'objet en travail soit bien maintenu en place quand on opère sur lui certaines opérations de montage et/ou de réglage.

Si l'on se reporte maintenant à la figure 4, on voit que le carrousel 3 est monté de manière amovible sur un plateau 9 entraîné lui-même par un premier organe moteur 5. Le carrousel est engagé librement sur l'arbre 31 du plateau 9. Le plateau 9 est pourvu d'une goupille 10 engagée dans un trou 11 pratiqué dans le carrousel 3. Cette goupille entraîne le carrousel en rotation. Le premier organe moteur 5 est du type pas à pas capable de faire tourner le carrousel 3 d'un pas (voir figure 3) correspondant à l'angle α qui sépare deux éléments porteurs voisins. Cette avance d'un pas s'effectue quand la pièce en travail 1' (figure 2) a réintégré le carrousel 3 sous l'impulsion du dispositif de commande 8. Comme le montrent les figures 4 et 5, le premier organe entraîne une vis sans fin 33 via un accouplement 32. La vis 33 entraîne à son tour une roue dentée 34 qui est solidaire de l'arbre 31.

Les explications qui viennent d'être données rendent évident à quel point l'interchangeabilité du carrousel 3 est aisée. En effet, il suffit de soulever manuellement le carrousel pour le remplacer par un autre. Ainsi apparaît un avantage dispensé par l'invention à savoir de disposer de carrousels facilement manipulables, aisément transportables et même empilables dans des magasins, avantages que n'offre aucun appareil connu, du moins à la connaissance du déposant.

Comme on l'a déjà dit plus haut, le dispositif comporte un second organe moteur 7 pour amener un des éléments porteurs 4 au poste de travail 2. Ce second organe moteur 7 consiste aussi en un moteur pas à pas. Comme le montrent les figures 4 et 5, ce second organe moteur 7 entraîne, par le truchement d'un accouplement 35, une courroie crantée 12 engrenant avec deux poulies dentées 36 et 37. A cette courroie est attaché le chariot 6 pour véhiculer par un mouvement de va-et-vient, l'élément porteur 4 d'abord au poste de travail 2, puis au carrousel 3. On a donc ainsi montré un autre avantage de l'invention qui consiste à sortir un objet à travailler de l'ensemble des autres objets en attente pour ne pas être gêné par eux.

Sans qu'il soit nécessaire de le décrire dans le détail, parce qu'évident de l'homme du métier, le dispositif de l'invention demande à être piloté par un petit ordinateur programmable commandé entre autres par différents senseurs d'état. Outre un clavier de commande avec affichage LCD, ce système de commande permettra par exemple la rotation rapide du carrousel d'un ou de plusieurs pas dans un sens ou dans l'autre, la sélection par le clavier du nombre de positions des disques et la rotation du carrousel sans saisie d'éléments porteurs. Ce système peut comprendre encore un compteur totalisateur et journalier avec remise à zéro et une recherche automatique des références machine à l'enclenchement. En ce qui concerne les senseurs d'état, le dispositif comprendra au moins un détecteur du point zéro du carrousel, un détecteur du point zéro du chariot entraînant l'élément porteur et un détecteur de la présence du carrousel.

Le dispositif décrit convient particulièrement bien à traiter des pièces d'horlogerie et, en général, des objets de petites dimensions ayant rapport à la micromécanique.

## Revendications

1. Dispositif pour amener l'un après l'autre une pluralité d'objets (1) de petites dimensions à un poste de travail (2) desservi par un opérateur chargé notamment d'assembler manuellement au moins un composant sur lesdits objets, comprenant :
- un magasin d'amenée mû par un premier organe moteur (5), portant une pluralité d'éléments porteurs (4).
- un chariot (6) mû par un second organe moteur (7), ce chariot étant arrangé pour venir saisir un des éléments porteurs quand ledit élément porteur occupe une position angulaire déterminée et pour amener ce même élément porteur au poste de travail (2) installé en dehors de la périphérie du magasin d'amnenée
- un dispositif de commande (8) actionnable par l'opérateur une fois l'assemblage terminé pour, successivement, ramener l'élément porteur sur le magasin d'amenée le chariot, et faire tourner ledit magasin d'amenée jusqu'â ce que l'élément porteur suivant occupe la position angulaire déterminée propre à l'amener sur le poste de travail via ledit chariot, **caractérisé en ce que** le magasin d'amenée est un carrousel qui porte dans sa zone périphérique la pluralité d'éléments porteurs arrangés pour porter chacun un objet (1) auquel doit être assemblé au moins un composant,.
et **en ce que** le carrousel (3) est monté de manière amovible sur un plateau (9) entraîné par le premier organe moteur (5), ce plateau portant une goupille (10) engagée dans un trou (11) pratiqué dans le carrousel.

2. Dispositif selon la revendication 1, **caractérisé par le fait que** le premier organe moteur (5) est un moteur pas à pas apte à faire tourner le carrousel (3) d'un pas correspondant à l'angle (α) qui sépare deux éléments porteurs voisins.

3. Dispositif selon la revendication 1, **caractérisé par le fait que** le second organe moteur (7) est un moteur pas à pas apte à entraîner une courroie crantée (12) à laquelle est attaché le chariot (6).

4. Dispositif selon la revendication 1, **caractérisé par le fait que** le carrousel (3) comporte dans sa zone périphérique une pluralité de premières échancrures (13) rectangulaires disposées radialement, que le poste de travail (2) présente une plaque (14) pourvue d'une seconde échancrure (15) rectangulaire dont la largeur (A) est sensiblement égale à la largeur (B) des premières échancrures (13) rectangulaires, que l'élément porteur (4) comporte un galet (16) présentant un évidement (17) au milieu de sa tranche, cet évidement étant engagé soit dans une des premières échancrures, soit dans la seconde échancrure selon que, respectivement, l'élément porteur (4) se trouve sur le carrousel (3) ou sur le poste de travail (2), que le chariot (6) est pourvu de deux tenons (18, 19) entre lesquels est engagé le galet (16) pour être transporté du carrousel (3) au poste de travail (2) et inversement et que la position angulaire déterminée est celle pour laquelle une des premières échancrures (13) se trouve en prolongement de la seconde échancrure (15).

5. Dispositif selon la revendication 4, **caractérisé par le fait que** l'évidement (17) du galet (16) est circulaire (21) pour permettre la rotation de l'élément porteur (4) sur lui-même.

6. Dispositif selon la revendication 4, **caractérisé par le fait que** l'évidement (17) du galet (16) est carré (22) pour empêcher la rotation de l'élément porteur (4) sur lui-même.

7. Dispositif selon la revendication 4, **caractérisé par le fait que** les premières échancrures (13) et la seconde échancrure (15) sont munies de ressorts (20) pour maintenir l'élément porteur (4) en place.

## Patentansprüche

1. Vorrichtung zum aufeinanderfolgenden Zuführen mehrerer Objekte (1) mit kleinen Abmessungen zu einer von einer Bedienungsperson bedienten Arbeitsstation (2), um insbesondere wenigstens eine Komponente zu den Gegenständen manuell hinzuzufügen, mit:
- einem Zuführmagazin, das von einem ersten Motororgan (5) bewegt wird und eine Vielzahl von Trägerelementen (4) trägt,
- einem Schlitten (6), der von einem zweiten Motororgan (7) bewegt wird und so beschaffen ist, daß er eines der Trägerelemente ergreift, wenn dieses Trägerelement eine bestimmte Winkelposition einnimmt, und dieses Trägerelement der außerhalb des Umfangs des Zuführungsmagazins installierten Arbeitsstation (2) zuführt,
- einer von der Bedienungsperson betätigbare Steuervorrichtung (8), sobald die Hinzufügen beendet ist, um nacheinander das Trägerelement über den Schlitten auf das Zuführmagazin zu laden und das Zuführmagazin zu drehen, bis das folgende Trägerelement die bestimmte Winkelposition einnimmt, in der es der Arbeitsstation über den Schlitten zugeführt werden kann, **dadurch gekennzeichnet, daß** das Zuführmagazin ein Karussell ist, das in seinem Umfangsbereich die Vielzahl von Trägerelementen trägt, die so angeordnet sind, daß sie jeweils ein Objekt (1) tragen, zu dem wenigstens eine Komponente hinzugefügt werden soll, und daß das Karussell (3) an einer Platte (9), die von dem ersten Motorelement (5) angetrieben wird, lösbar angebracht ist, wobei diese Platte einen Zapfen (10) trägt, der mit einem in dem Karussell ausgebildeten Loch (11) in Eingriff ist.

2. Vorrichtung nach Anspruch 1, **dadurch gekennzeichnet, daß** das erste Motororgan (5) ein Schrittmotor ist, der das Karussell (3) um einen Schritt drehen kann, der dem Winkel αentspricht, der zwei benachbarte Trägerelemente trennt.

3. Vorrichtung nach Anspruch 1, **dadurch gekennzeichnet, daß** das zweite Motororgan (7) ein Schrittmotor ist, der einen Zahnriemen (12) antreiben kann, an dem der Schlitten (6) befestigt ist.

4. Vorrichtung nach Anspruch 1, **dadurch gekennzeichnet, daß** das Karussell (3) in seiner Umfangszone mehrere erste rechtwinklige Ausschnitte (13), die radial angeordnet sind, umfaßt, daß die Arbeitsstation (2) eine Platte (14) aufweist, die mit einem zweiten rechtwinkligen Ausschnitt (15) versehen ist, dessen Breite (A) im wesentlichen gleich der Breite (B) der ersten rechtwinkligen Ausschnitte (13) ist, daß das Trägerelement (4) eine Rolle (16) trägt, die in ihrer Schmalseite mittig eine Aussparung (17) aufweist, die in Abhängigkeit davon, ob sich das Trägerelement (4) auf dem Karussell (3) oder in der Arbeitsstation (2) befindet, mit den ersten Ausschnitten bzw. mit dem zweiten Ausschnitt in Eingriff ist, daß der Schlitten (6) mit zwei Zapfen (18, 19) versehen ist, zwischen denen die Rolle (16) ergriffen wird, um vom Karussell (3) zur Arbeitsstation (2) und umgekehrt transportiert zu werden, und daß die bestimmte Winkelposition jene ist, in der sich einer der ersten Ausschnitte (13) in der Verlängerung des zweiten Ausschnitts (15) befindet.

5. Vorrichtung nach Anspruch 4, **dadurch gekennzeichnet, daß** die Aussparung (17) der Rolle (16) kreisförmig (21) ist, um die Drehung des Trägerelements (4) um sich selbst zu ermöglichen.

6. Vorrichtung nach Anspruch 4, **dadurch gekennzeichnet, daß** die Aussparung (17) der Rolle (16) quadratisch (22) ist, um die Drehung des Trägerelements (4) um sich selbst zu verhindern.

7. Vorrichtung nach Anspruch 4, **dadurch gekennzeichnet, daß** die ersten Ausschnitte (13) und der zweite Ausschnitt (16) mit Federn (20) versehen sind, um das Trägerelement (4) festzuhalten.

## Claims

1. Device for transferring a plurality of objects (1) of small dimensions, one after the other, to a workstation (2) controlled by an operator responsible, particularly, for manually assembling at least one component on said objects, including:
- a transfer magazine driven by a first motor member (5), carrying a plurality of carrier elements (4),
- a carriage (6) driven by a second motor member (7), said carriage being arranged to grip one of the carrier elements when said carrier element occupies a specific angular position and to bring said same carrier element to the work station (2) installed outside the periphery of the transfer magazine,
- a control device (8) able to be activated by the operator once assembling has finished to, successively, return the carrier element to the transfer magazine via the carriage, and rotate said transfer magazine until the next carrier element occupies the specific angular position able to bring it to the work station via said carriage, **characterised in that** the transfer magazine is a carrousel that carries in its peripheral zone the plurality of carrier elements arranged to each carry an object (1) to which at least one component has to be assembled, and **in that** the carrousel (3) is removably mounted on a plate (9) driven by the first motor member (5), this plate carrying a pin (10) engaged in a hole (11) made in the carrousel.

2. Device according to claim 1, **characterised in that** the first motor member (5) is a stepping motor able to rotate the carrousel (3) by a step corresponding to the angle (α) which separates two neighbouring carrier elements.

3. Device according to claim 1, **characterised in that** the second motor member (7) is a stepping motor able to drive a synchronous belt (12) to which the carriage (6) is attached.

4. Device according to claim 1, **characterised in that** the carrousel (3) includes in its peripheral region a plurality of first rectangular scallops (13) arranged radially, **in that** the work station (2) has a plate (14) provided with a second rectangular scallop (15) whose width (A) is substantially equal to the width (B) of the first rectangular scallop (13), **in that** the carrier element (4) includes a roller (16) having a recess (17) in the middle of its side, this recess being engaged either in one of the first scallops, or in the second scallop depending upon whether, respectively, the carrier element (4) is on the carrousel (3), or on the work station (2), **in that** the carriage (6) is provided with two tenons (18, 19) between which the roller (16) is engaged to be transported from the carrousel (3) to the work station (2) and vice versa and **in that** the specific angular position is that for which one of the first scallops (13) is located in the extended plane of the second scallop (15).

5. Device according to claim 4, **characterised in that** the recess (17) of the roller (16) is circular (21) to allow the carrier element (4) to rotate upon itself.

6. Device according to claim 4, **characterised in that** the recess (17) of the roller (16) is square (22) to prevent the carrier element (4) from rotating upon itself.

7. Device according to claim 4, **characterised in that** the first scallops (13) and the second scallop (15) are provided with springs (20) for holding the carrier element (4) in place.
